# EUROPEAN PATENT APPLICATION

(11) **EP 2 479 661 A2**
(43) Date of publication of application: **25.07.2012**
(21) Application number: 10817436.8
(22) Date of filing: 17.09.2010
(51) Int. Cl.: G06F 3/14, G06F 13/10

(54) **TRIPLE DISPLAY DEVICE, AND COMPUTER EMPLOYING SAME**

(30) Priority: 18.09.2009 KR 20090088420
(71) Applicant: Lee, Eun Suk, Seoul 135-877 (KR)
(72) Inventor: Lee, Eun Suk, Seoul 135-877 (KR)
(74) Representative: ABG Patentes, S.L.
(86) International application number: PCT/KR2010/006384
(87) International publication number: WO 2011/034367

(57) **Abstract**

Disclosed are a triple display device and a computer employing same. The triple display device of the present invention comprises a main display, a first auxiliary display, and a second auxiliary display. The main display has a first input port connected, via a first cable, to a first output port of a dual graphic card installed on a main board of a computer, to display status information of the program being run on the computer. The first auxiliary display has a second input port connected, via a second cable, to a second output port of the dual graphic card, to display data (for example, advertisement content or company intranet information) automatically executed on the computer and provided by a specific site connected via the Internet. The second auxiliary display has a USB video module which has a USB output port connected, via a third cable, to a USB output port of the main board, to display data being executed in the main board in accordance with the command inputted by a user. According to the present invention, an increased number of workspaces can be ensured without additional costs, and the first auxiliary display is employed to enable the dedicated display of specific information, and also to enable the constant display of advertisement content to achieve advertisement effects.

## Description

### [Technical Field]

The present invention relates to a display and a computer employing the same, and more particularly, to a display in which a plurality of screens capable of displaying data output from a main board of computer are integrally formed and a computer employing the same.

### [Background Art]

Generally, a computer is configured to include a main board mounted with a central processing unit, a video graphics array (VGA) card, a sound chip, an input/output interface, a storage device, an input device, an output device (for example, monitor, printer, etc.), or the like. In this configuration, the display, i.e., the monitor reproduces signals transmitted from the VGA card into predetermined images according to the CPU mounted on the main board, which are in turn output on the screen to be viewed by a user.

The display simultaneously displays page windows having various pieces of information on one screen according to the manipulation of a user. For example, execution page windows of programs operated by the user and web pages provided through Internet connection, etc., are displayed on one screen of the display.

As such, the existing display configured of one screen has problems in limiting a space to simultaneously display execution screens for each program on one screen and causing the inconvenience of work, when a computer simultaneously executes several works. In order to solve the restriction of the work space, a technology of securing the work space by connecting two monitors to one computer has been proposed.

As an example of the technology, the inventors of the present invention invented a dual display capable of displaying data output from a computer by connecting monitors to one computer in series or in parallel.

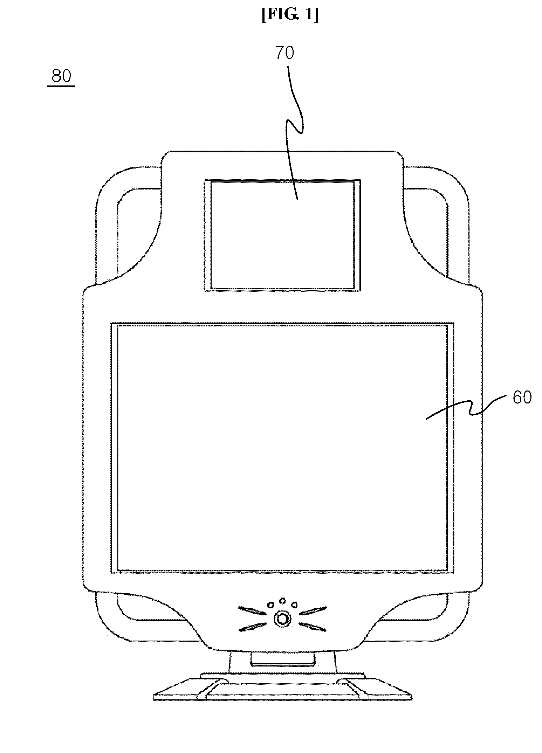

FIG 1 is a view showing an example of a dual display having two different displays.

As shown in FIG 1, a dual display 80 is configured to include a main display 60 and a sub-display 70. The size of the sub-display is formed to be smaller than the main display 60. Further, the sub-display 70 is manufactured to be fixed to an upper side of the main display 60 in the same direction as the screen direction of the main display 60.

As such, it is possible to secure a wider working space than that of the related art by displaying the working status information through program execution of a computer by using two screens.

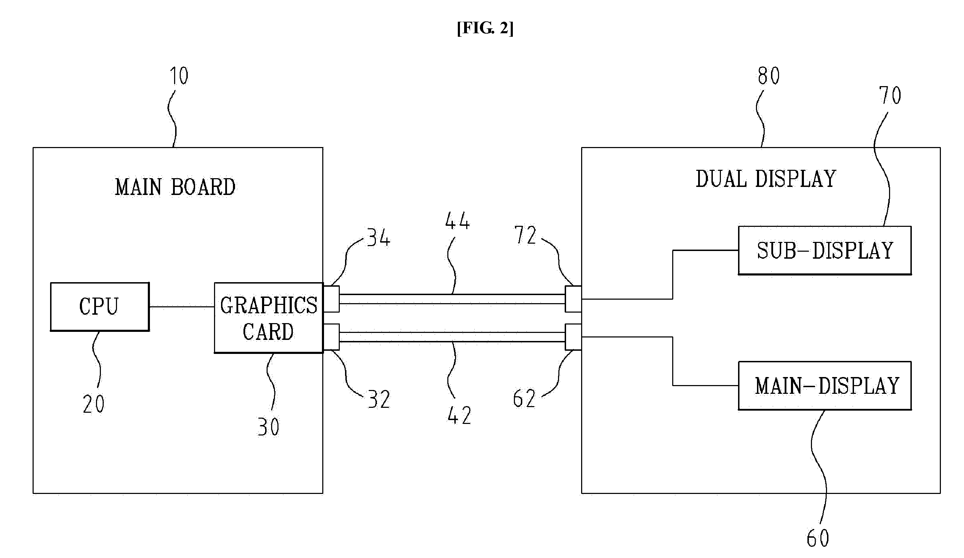

FIG 2 is a diagram showing an example of connecting the dual display of FIG 1 to a computer main body.

As shown in FIG 2, a main board 10 mounted in a computer is provided with a CPU 20 and a graphics card 30, wherein the CPU 20 controls the graphics card 30 outputting display data. The Graphics card 30 is a general dual graphics card and includes first and second output ports 32 and 34 outputting display data to each of the main display 60 and the sub-display 70. Instead of the dual graphics card 30, two single graphics card may be employed.

The main display 60 includes a first input port 62 for receiving display data output from the first output port 32 of the Graphics card 30 and the sub-display 70 includes a second input port 72 for receiving display data output from the second output port 34.

In this configuration, the first output port 32 of the graphics card 30 and the first input port 62 of the main display 60 are connected to each other through a first cable 42. The second output port 34 of the graphics card 30 and the second input port 72 of the sub-display 70 are connected to each other through a second cable 44.

According to the connection structure, the CPU 20 controls the main display 60 to output the display data to the main display 60 or the sub-display 70 through the first and second cables 42 and 44.

Therefore, it is possible to secure a wider working space than that of the related art executing works using one screen and increase the speed and efficiency of work in view of a user by displaying information of results obtained by processing various works on the main display 60 and the sub-display 70.

However, even the dual display has a limit in simultaneously displaying a number of programs using two screens. Therefore, a demand for a display capable of securing wider working space so as to display result data obtained by processing a plurality of programs.

In order to meet the requirements, a technology of manufacturing a computer so as to connect a plurality (3 or more) of monitors to the computer may be considered. In this case, however, the computer additionally requires graphics card that is mounted on a main board and is connected to a monitor additionally provided in addition to two monitors to output display data. As such, in order to connect at least three monitors to a computer, a graphics card should be additionally provided in the computer, cost is increased in hardware.

Further, even though a separate graphics card is mounted in the main board of a computer, an additionally mounted graphics card outputs the same information as the display data output to the existing mounted graphics card rather than outputting the display data having different information to the display data output to the existing graphics card. Therefore, the technology cannot secure the wider working space in order to display the program executing result information according to the different works.

In order to solve the problems, a multi-output graphics card having performance capable of outputting different display data to a plurality of monitors connected to each output port may be mounted in a computer by including multi-output ports. However, the multi-output graphics card having the functions is sold at a high price 2 to 3 times or more than the existing graphics card. Therefore, expensive multi-output graphics card should be additionally purchased, thereby increasing the hardware cost.

Meanwhile, a technology of installing software having a function capable of outputting different display data to each monitor in a computer by additionally mounting a graphics card on a main board may be considered. However, there is no software developed to have these functions yet and even though the software is present, the user of computer additionally purchases the software having the output function of the multi-display data, thereby increasing software costs.

### [Disclosure]

### [Technical Problem]

Accordingly, it is an object of the present invention to provide a display capable of securing wider working space by displaying different work data executed in computer and a computer employing the same.

Another object of the present invention is to provide a display having a multiscreen configured to output different display data on each screen of a computer while minimizing hardware costs in manufacturing a display configured of a plurality of screens and a computer employing the same.

The other object of the present invention is to provide a display having a multiscreen configured to output different display data on each screen without a computer needing a separate control program in software in manufacturing a display configured of a plurality of screens and a computer employing the same.

### [Technical Solution]

An aspect of the present invention, there is provided a display connected to a computer and displaying data provided from the computer, including: a main display including a first input port, the first input port being connected to a first output port of a dual graphics card mounted on a main board of the computer through a first cable; a first sub-display including a second input port, the second input port being connected to a second output port of the dual graphics card through a second cable; and a second sub-display including a USB video module having a third input port, the USB video module being connected to a USB output port included in the main board through a third cable, wherein the first sub-display and the second sub-display are installed at any of left and right sides or upper and lower sides.

In the present invention, the screen size of the first sub-display and the second sub-display are smaller than that of the main display.

The sub-display and the second sub-display may be hinge-coupled to the main display to be rotatably coupled thereto. And, the first sub-display and the second sub-display may be shaft-coupled to the main display to be rotatably coupled thereto.

In addition, at least one of the first sub-display and the second sub-display may be removably coupled to the main display.

According to another aspect of the present invention, there is provided a computer, including: a display having a configuration as set forth above; a main board including USB output ports, a communication unit for receiving display data by connecting to website through an internet network, and a controller controlling an operation for outputting display data to the display; and a dual graphics card mounted on the main board to output the display data to the display according to the control of a controller.

The computer of claim may further include a connection unit automatically accessing a specific website through the communication unit by executing an embedded connection program. In this case, the controller outputs data provided from the specific website to the first sub-display or the second sub-display.

The computer of claim may further include a connection unit automatically accessing a specific website through the communication unit by executing an embedded connection program. In this case, the controller outputs data provided from the specific website to the first sub-display.

The data provided from the specific site is advertisement contents or intranet information within a company.

The controller receives a linked webpage corresponding to the selected data through the internet network and outputs it to the main display unit or the second sub-display, when the data displayed on the first sub-display is selected through the input interface. Further, the controller receives a linked webpage corresponding to the selected data through the internet network and outputs it to the main display unit or the first sub-display, when the data displayed on the second sub-display is selected through the input interface

The controller sets the display data requested to be display according to the command input through the input interface by the user to be displayed by being connected with the main display and the second sub-display. In this case, the first sub-display is set to display only data (advertisement contents or intranet information within a company, etc.) provided from a specific site.

The computer may be integrally manufactured by providing the display, the main board, and the dual graphics card in one casing. In this configuration, the second input port of the first sub-display is directly connected to the second output port of the dual graphics card through the digital video cable. In this case, the data output from the second output port are directly received to the second input port in a digital format to be displayed on the first sub-display.

### [Advantageous Effects]

According to the present invention, the triple monitor including the main display and the first and second sub-display are integrally provided in the casing, the main display and the first sub-display are connected to the dual graphics card mounted on the main board of the computer, the second sub-display is connected to the USB output port of the main board to output the display data having different information output from the computer, respectively, thereby making it possible to secure the larger number of computer working spaces (screen) while minimizing additional costs in hardware and software.

Further, according to the present invention, the first sub-display of the main display and the first and second sub-displays integrally provided in the casing sets to forcibly display at all times data such as the advertisement contents or the intranet information within a company from the specific site through the internet network, thereby making it possible to obtain an advertisement or an information notification effect through the second sub-display

### [Brief description of the drawings]

The above and other objects, features and other advantages of the present invention will be more clearly understood from the following detailed description taken in conjunction with the accompanying drawings, in which:
FIG 1 is a view showing an example of a dual monitor having two monitors according to the related art;
FIG 2 is a diagram showing an example of connecting the monitor of FIG 1 to a computer main body;
FIG 3 is a view showing an example of a product of an integrated triple display according to an exemplary embodiment of the present invention;
FIG 4 is a view showing an example of connecting the triple display according to the exemplary embodiment of the present invention to the computer main body;
FIG 5 is a view showing another example of connecting the triple display according to the exemplary embodiment of the present invention to the computer main body; and
FIG 6 is a diagram showing an example of connecting the triple display for transmitting display data according to the exemplary embodiment of the present invention to the computer main body.

### [Best Mode]

Hereinafter, exemplary embodiments of the present invention will be described in detail with reference to the accompanying drawings. It is to be noted that like components are denoted by like reference numerals throughout the drawings. Moreover, detailed descriptions related to well-known functions or configurations will be ruled out in order not to unnecessarily obscure the subject matter of the present invention.

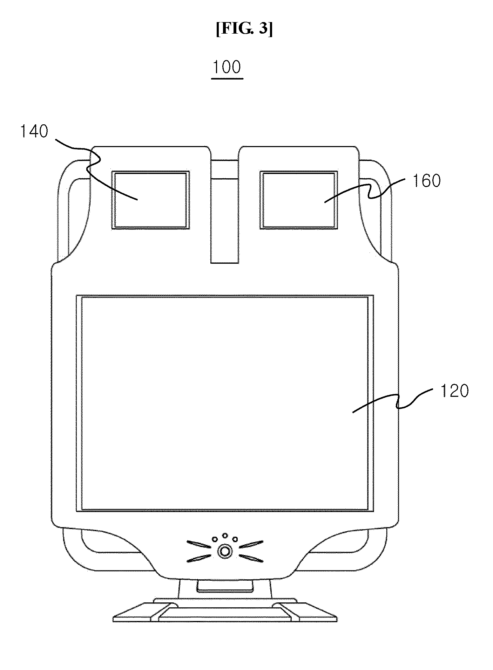

FIG 3 is a view showing an example of a product of an integrated triple display according to an exemplary embodiment of the present invention.

As shown in FIG 3, a triple display 100 according to an exemplary embodiment of the present invention is configured to include a main display 120, a first sub-display 140, and a second sub-display 160.

In the exemplary embodiment, the main display 120, the first sub-display 140, and the second sub-display 160 are integrally configured, wherein the size of the first sub-display 140 and the second sub-display 160 are configured to be smaller than the main display 120. Further, the first sub-display 140 and the second sub-display 160 may be installed at any of left and right sides or upper or lower sides of the main display 120. In the exemplary embodiment, they are installed at the left and right of the upper side of the main display 120, respectively.

As shown in FIG 3, when the first sub-display 140 and the second sub-display 160 are installed at the upper side of the main display 120, they are fixedly installed left and right in the same direction as the main display 120. As another example, the first sub-display 140 and the second sub-display 160 may be fixedly, rotatably or pivotly installed, having a predetermined angle in any of front and back and left and right directions with respect to the main display 120.

For example, the first sub-display 140 and the second sub-display 160 may be installed, having a predetermined angle with respect to the main display 120, in consideration of a viewing angle and eye fatigue of a user executing a computer work. Considering this, it is preferable that the upper side portions of the first sub-display 140 and the second sub-display 160 are installed at an angle of 10° to 20° forward with respect to a vertical direction of the main display 120 and are installed at an angle of 5° to 15° with respect to a horizontal direction of the main display 120.

The main display 120, the first sub-display 140, and the second sub-display 160 having the above-mentioned configuration outputs display data transmitted from the computer connected through a cable for transmitting the display data as images.

Therefore, the screen capable of displaying the display data output from the computer is configured in three, thereby making it possible to secure a larger number of working spaces than in the display configured of the existing one screen or two screens.

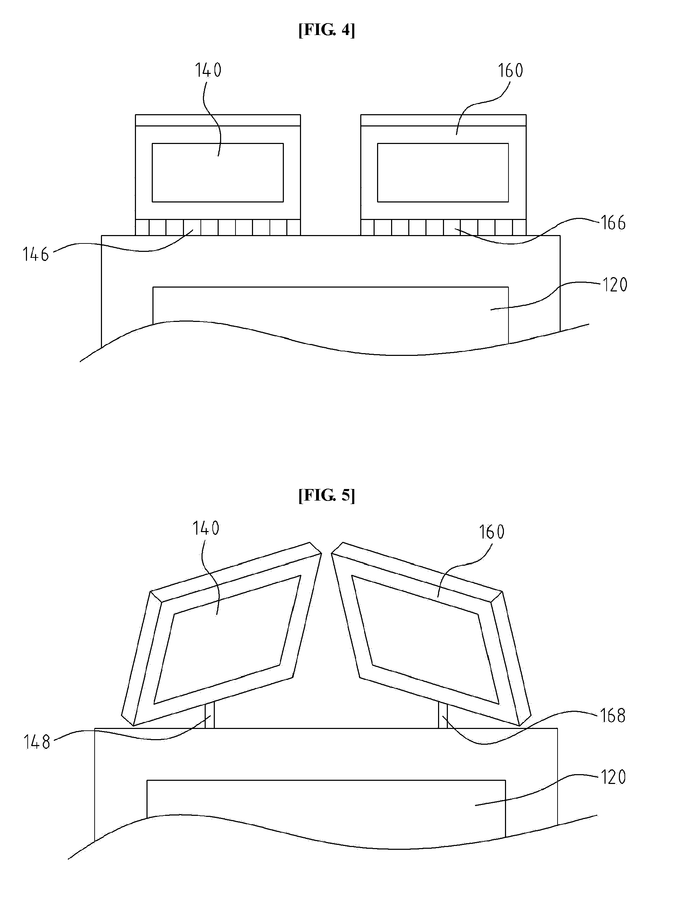

FIG 4 is a view showing another example of connecting the first sub-display 140 and the second sub-display 160 to the main display 120 in the triple display of the present invention.

As shown in FIG 4, the lower side portions of the first sub-display 140 and the second sub-display 160 is hinge-coupled to the upper side of the main display 120, such that the first sub-display 140 and the second sub-display 160 are rotatably coupled to each other forward and/or backward by hinge shafts 146 and 166.

As such, it can more sharply confirm the information displayed on the screen corresponding to the viewing angle through which the user views each screen by rotatably coupling the first sub-display 140 and the second sub-display 160 forward and backward.

FIG 5 is a view showing another example of connecting the first sub-display 140 and the second sub-display 160 to the main display 120 in the triple display of the present invention.

As shown in FIG 5, the centers of lower sides of the first sub-display 140 and the second sub-display 160 is hinge and rotating shaft-coupled to the upper side of the main display 120, such that the first sub-display 140 and the second sub-display 160 are rotatably coupled to each other in the front and back and left and right directions by hinge and rotating shafts 148 and 168.

Further, as another example of the present invention, at least one of the first sub-display 140 and the second sub-display 160 may be installed to be removably coupled to the main display 120. Preferably, the first sub-display 140 may be installed to be rotatably installed to the main display 120 and the second sub-display 160 may be installed to be removably coupled to the main display 120.

As described above, it can easily confirm the information displayed on each screen by rotating the first sub-display 140 and the second sub-display 160 forward and backward and left and right by rotatably coupling the first sub-display 140 and the second sub-display 160 to the main display 120, even though the user is positioned in any direction. In addition, the second sub-display 160 is installed to be removably coupled to the main display 120, such that it is configured to be removably coupled to the existing integrated dual display rather than the integrated triple display as shown in FIG 1, which may be implemented to have the same configuration as the triple display according to the present invention.

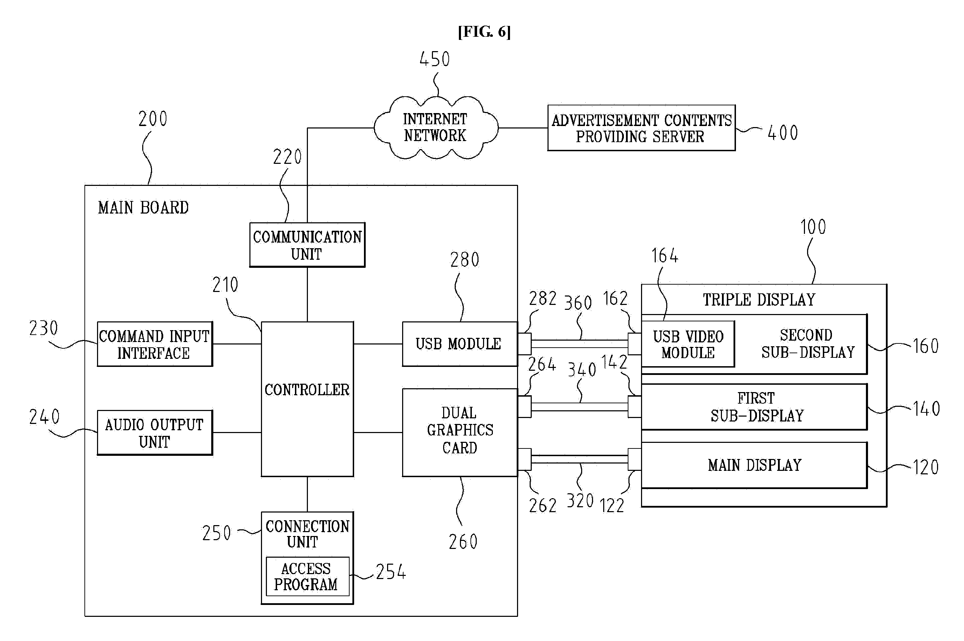

FIG 6 is a diagram showing an example of connecting the triple display for transmitting display data according to the exemplary embodiment of the present invention to the computer main body.

As shown in FIG 6, the triple display 100 is configured to include the main display 120, the first sub-display 140, and the second sub-display 160.

In this configuration, the main display 120 includes a first input port 122 for receiving the display data output from a main board 200. In this case, the first input port 122 is configured to have a digital video interface (DVI) and/or analog video interface (AVI) port. In the present exemplary embodiment, the first input port 122 is configured by the DVI port.

The sub-display 140 includes a second input port 142 for receiving the display data output from the main board 200. In this case, the second input port 142 is configured by the analog video interface (AVI) port.

The sub-display 160 includes a third input port 162 for receiving the display data output from the main board 200. In this case, the third input port 162 is configured by a universal serial bus (USB) port. In addition, in the present exemplary embodiment, the second sub-display 160 includes a USB video module 164 that receives the display data from the third input port 162, i.e., the USB port to output them to the screen of the second sub-display 160. In this configuration, the USB video module 164 serves to convert the display data of USB streaming into a data format for displaying on the screen of the second sub-display 160 and output them.

As such, the second sub-display 160 of the triple display 100 configured of three displays is configured to receive the display data through the USB port 162 to convert them into a format displayable on the screen through the USB video module 164 and output and process them, such that the USB port 162 of the second sub-display 160 is connected to a USB port 282 basically included in the main board 200 of the computer, thereby making it possible to output the display data. Therefore, in order to connect with the second sub-display 160, there is no need to additionally mount the graphics card to the main board 200 of the computer or separately configure the multi display output software for outputting different display data to each display. In addition, it can configure the triple display screen while using the graphics card mounted in the existing computer as it is, without adding the expensive triple graphics card configured to output different display data by connecting to the main display, the first sub-display, and the second sub-display 120, 140, and 160, respectively, in one graphics card.

In the present exemplary embodiment, the operations of the main display 120, the first display 140, and the second sub-display 160 may be configured to display the corresponding display data to be connected with each other. That is, the main display 120 displays the main processing contents executed in the computer connected to the triple display 100. The first sub-display 140 and the second sub-display 160 are displayed by connecting with link information that connects the use environment, working data, and web pages of the computer, etc., according to the request of the user.

In the exemplary embodiment, the first sub-display 140 may be set to display only data (for example, advertisement contents, intranet in company) provided from the external specific internet website. That is, in the exemplary embodiment of the present invention, the first sub-display 140 is fixedly set as the display purpose of the website providing data that cannot be changed by the user and the second sub-display 160 may be set as purposes to display any data that can be changed according to the request of the user. To the contrary, the first sub-display 140 may be set to change and display any data and the second sub-display 160 may be fixedly set to display the specific website providing data. In this case, the operations of displaying the data of the first sub-display 140 and the second sub-display 160 and receiving and displaying the advertisement contents will be described with reference to the configuration of the main board 200.

The main board 200 of the computer shown in FIG 6 is configured to include a controller 210, a communication unit 220, a command input interface 230, an audio outputting unit 240, a connection unit 250, a dual graphics card 260, and a USB module 280.

The controller 210 controls the general operation of the computer and controls the operation for outputting the display data to the triple display 100 according to the exemplary embodiment of the present invention.

The communication unit 220 is connected to the website through the internet network 450 and receives data provided from the accessed website. According to the exemplary embodiment, the communication unit 220 accesses the advertisement contents providing server 400 through the internet network 450 to receive data provided from the advertisement contents providing server 400. In this case, the advertisement contents providing server 400 databases, stores, and manages the advertisement data received from the advertisement requesting companies wanting the advertisement through the triple display 100 of the present invention and provides the stored advertisement data to the computer when the website accessing signal is received from the computer connected to the triple display 100. The operation of the advertisement contents providing server 400 according to the internet connection with the computer will be described in detail with reference to a business model

The command input interface 230 receives commands input from the user and provides them to the controller 210. In the exemplary embodiment, the command input interface 230 receives the selection command of the display for displaying the display data input from the user and provides it to the controller 210. The command input interface 230 according to the present exemplary embodiment may generally be applied to a keyboard or a mouse connected to the main board 200 of the computer.

The audio outputting unit 240 outputs the audio data generated from the corresponding program executed according to the command of the controller 210 through a speaker.

The connection unit 250 connects to the specific website set through the internet network 450 by executing the connection program 254 stored in the state where the system is turned-on by applying power to the main board 200 to receive the provided data. In this case, the connection program 254 is an execution program that allows the connection unit 250 to apply the connection command of the specific website to the controller 210 to connect the controller 210 to the specific website through the communication unit 220.

In the exemplary embodiment, the specific website is the advertisement contents provider server 400 shown in FIG 6. The advertisement contents providing server 400 of the present invention serves to manage the advertisement contents requested by companies and performs the function providing the advertisement contents through the internet network 450.

By the system configuration, in the exemplary embodiment, the controller 210 supplies power to the main board 200 to complete the booting of the computer through the operating system (OS) program, such that the connection program 254 is automatically executed and previously set through the connection unit 250 to control the communication unit 220 to receive the data provided by connecting to the advertisement contents providing server 400.

In this case, the controller 210 outputs the data received from the advertisement contents providing server 400 to the first sub-display 140 through the second output port 264.

The dual graphics card 260 has a structure that is mounted on the main board 200 to connect to the controller 210 through the bus and performs the output operation of the display data according to the command of the controller 210. The dual graphics card 260 includes the first output port 262 and the second output port 264 for outputting the display data. In this case, the first output port 262 may be configured in the DVI port or the AVI port type and the second output port 264 may be configured in the AVI port type. Preferably, the first output port 262 and the second output port 264 each are configured to have the same standard type as the first input port 122 of the main display 120 and the second input port 142 of the first sub-display 140 corresponding to the connection.

The USB module 280 transmits and receives the corresponding data corresponding to the external devices (keyboard, mouse, printer, etc.) through the USB output port 282. In the exemplary embodiment, the USB module 280 outputs the display data through the USB output port 282 according to the control of the controller 210.

In the present invention, the connection structure between the dual graphics card 260 and the USB module 280 and the main display 120 and the first sub-display 140 and the second sub-display 160 is as follows.

In this configuration, the first output port 262 of the dual graphics card 260 and the first input port 122 of the main display 120 are connected to each other through a first cable 320. The second output port 264 of the dual graphics card 260 and the second input port 142 of the first sub-display 140 are connected to each other through a first cable 340. The USB output port 282 connected to the USB module 280 and the third input port 162 of the second sub-display 160 are connected through the third cable 360. In the exemplary embodiment, the first cable 320 is the digital video transmission (DVI) cable, the second cable 340 is the analog video transmission (AVI) cable, and the third cable 360 is the USB video transmission cable. In addition, the USB output port 282 and the third input port 162 may be configured to connect to each other through wireless USB communication by mounting a USB wireless communication module to each port 282 and 162, instead of the third cable 360.

In this case, the USB video transmission cable 360 transmits data based on a USB transmission protocol technology supporting a maximum transmission speed of 480 Mbps that is a USB 2.0 technology provided through the USB module 280 in the computer. The data transmission speed of the USB video transmission cable 360 has a slower characteristic than that of the video transmission cables 320 and 340, which does not smoothly display the displayed image when large-capacity data such as high-quality moving pictures are displayed on the screen. Therefore, in the exemplary embodiment, the type of the display data to be displayed on the second sub-display 160 by being transmitted through the USB video transmission cable 360 is preferably the low-capacity display data such as the web page configured of the general text document or text or the website link data. Therefore, in the exemplary embodiment, the controller 210 outputs the advertisement contents data provided from the advertisement contents providing server 400 to the first sub-display 140 and is set to display them.

In this case, the advertisement contents data is produced to configure one or a plurality of pieces of advertisement information as one page and display it. In addition, the advertisement contents data may be configured as text, wherein the text may be generally produced as basically coupled images, flash, moving pictures, etc.

In the exemplary embodiment, the controller 210 may control to fixedly display the specific web information (for example, intranet information in company or organization, news, mail, education, stock, chatting, etc.) provided from the external contents providing server connected through the advertisement contents data as well as the internet network 450 to the second sub-display 160.

As such, in the exemplary embodiment, the first sub-display 140 is set to display the advertisement contents produced in various mechanisms and the second sub-display 160 is set to transmit the low-capacity display data and display them in consideration of the USB transmission characteristics.

According to the exemplary embodiment of the present invention, when the computer is turned-on without the user using the Internet, the advertisement contents are displayed on the first sub-display 140 other than the main display 120, such that the user can view the advertisement contents at all times, thereby making it possible to increase the advertisement effect.

In addition, when any one of the advertisement contents displayed on the first sub-display 140 is selected, the controller 210 accesses the linked website corresponding to the selected contents to receive the provided webpage. In this case, the controller 210 controls the output operation of the USB module 280 and the dual graphics card 260 to display the received web page on the second sub-display 160 or the main display 120.

The present exemplary embodiment describes that the controller 210 may control the connection unit 250 to access the advertisement contents providing server 400 through the internet network 450 by controlling the connection unit 250, but configures the connection unit 250 in hardware to be mounted on the main board 200 and accesses the advertisement contents providing server 400 through the communication unit 220. In this case, the exemplary embodiment of the present invention may set a key lock to the connection unit 250 configured in hardware and forcibly access the advertisement contents providing server 400 through the communication unit 220 in the state where the computer is turned-on to display the provided advertisement contents to the first sub-display 140. In this case, the connection unit 250 configured in hardware may be configured to receive separate power even though the computer is not turned-on to access the advertisement contents providing server 400.

Further, the exemplary embodiment describes that the controller 210 controls the advertisement contents provided from the external advertisement contents providing server 400 to be displayed through the first sub-display 140 or to be displayed through to the second sub-display 160.

In the present invention, when the computer is booted by receiving power, the controller 210 accesses the external advertisement contents providing server 400 to receive the advertisement contents to be displayed through the first sub-display 140 or the second sub-display 160, such that the manufacturer and user of the triple display 100 can perform business model capable of creating profit.

In other words, a profit can be created by allowing the user to obtain advertisement requesting costs from an advertiser wanting advertisements through the triple display 100. In this case, the manufacturer provides the advertisement contents requested by the advertisement companies to the computer connected to the triple display 100 through internet to provide the triple display 100 to users free or at a low cost under the conditions that the advertisement contents are viewed through the triple display 100, thereby building a business model capable of increasing the advertisement effect simultaneously securing more advertisement viewers. Therefore, the user can purchase the triple display 100 free or at a low cost under the conditions of receiving the advertisement.

In addition, as another business model, the manufacturer of the triple display 100 sells the triple display 100 to users in a lump sum or on the installment plan and provides the compensating service according to the advertisement viewed by the user, based on a time when the user views advertisement contents provided from the advertisement contents providing server 400 and displayed on the triple display 100 or the click frequency of the displayed advertisement contents and the access frequency to the linked website, etc. According to the compensation method according to the advertising viewing, points corresponding to cash may be regularly payed to the user viewing advertisements and the paid points may be exchanged for cash by the user or a part or all of installment to be paid according to the purchase of the triple display 100 may be instead paid as the paid points.

In addition, as another exemplary embodiment of the present invention, the user may instead pay a part or all of an amount of specific goods to be purchased in relation to the amount the advertisement contents provided from the advertisement contents providing server 400 and displayed on the triple display 100 as the accumulated points, instead of cash.

A demand of the triple display 100 of the present invention may be expanded through the business model as well as the advertisement effect may be increased.

Meanwhile, the triple display 100 of the present invention, the dual graphics card 260, and the main board 200 mounted with the USB module 280, and the connection unit 250 are provided in one casing, which may be configured as the integrally manufactured computer. In the case of the integrated computer, the dual graphics card 260 and the USB module 280 mounted on the main board 200 and the cables 320, 340, and 360 connecting the triple display 100 are manufactured to be packaged in the casing of the computer, such that the appearance may be improved and the installation space may be smaller than in the related art.

Meanwhile, when the computer and the display 100 are formed separately, the length of the cables 320, 340, and 360 connecting the main board 200 to the display 100 generally has the length of about 1.5 m. In this case, the display data generated through the main board 200 of the computer is a digital format and the distance capable of being transmitted and displayed without damaging the display data image quality is generally 20 cm to 40 cm. Therefore, in order to display the display data without damaging the image quality, by being transmitted at a distance of about 1.5 m, the dual graphics card 260 needs a digital to analog converter (DAC) module for converting the display data of the digital format into an analog format. In addition, in order to display the display data in an analog format received from the dual graphic card 260 on the screen, an analog to digital converter to convert into a digital format is needed in the first sub-display 140.

Meanwhile, when configuring the computer having the integrated triple display 100 and the main body of the computer, the connection distance of the second input port 142 of the first sub-display 140 with the second output port 264 of the dual graphics card 260 may be configured at 20 cm to 40 cm.

Therefore, the second input port 142 of the first sub-display 140 and the second output port 264 of the dual graphics card 260 may be configured to be directly connected to each other at 20 cm to 40 cm without the component DAC and ADC for the analog format and the digital format conversion for the display data. In this case, the display data of the digital format output from the second output port 264 of the dual graphics card 260 is directly received in the second input port 142 of the first sub-display 140 through the digital video cable to be displayed without the signal conversion, thereby improving the display speed of the display data and securing the original image quality for the displayed image.

In the triple display described together with the accompanying drawings shown in the present invention, it is described that the input ports 122 and 142 of the main display 120 and the first sub-display 140 are configured to have a standard and a shape corresponding to each output port 262 and 264 of the dual graphics card 260.

However, the input ports 122 and 142 of the main display 120 and the first sub-display 140 of the triple display of the present invention may be configured to have a standard and a shape different from each output port 262 and 264 of the dual graphics card 260. In this case, the input ports 122 and 142 of the main display 120 and the first sub-display 140 of the triple display is additionally installed with the converter for converting the standard of the output ports 262 and 264 of the dual graphics card 260 into the standard of the input ports 122 and 142.

In addition, the present invention describes that the input port 122 of the main display 120 and the input port 142 of the first sub-display 140 are formed corresponding to the standards of the output ports 262 and 264 of the dual graphics card 260 and the input port 162 of the second sub-display 160 is described corresponding to the standard of the output port 282 of the USB module 280. However, as another example of the present invention, the graphics card mounted in the main board 200 is configured as the single graphic card having one output port and even when the main board 200 has two USB output ports, may be configured to connect to the triple display of the present invention. In this case, the triple display is formed to have a shape that the input port 122 of the main display 120 corresponds to the output port of the single graphics card and the standard of the first sub-display 140 and the input ports 142 and 162 of the second sub-display correspond to the USB output port.

While the present invention has been described with reference to the preferred embodiments, it will be understood by those skilled in the related art that various modifications and variations may be made therein without departing from the scope of the present invention as defined by the appended claims.

## Claims

1. A display connected to a computer and displaying data provided from the computer, comprising:
a main display including a first input port, the first input port being connected to a first output port of a dual graphics card mounted on a main board of the computer through a first cable;
a first sub-display including a second input port, the second input port being connected to a second output port of the dual graphics card through a second cable; and
a second sub-display including a USB video module having a third input port, the USB video module being connected to a USB output port included in the main board through a third cable,
wherein the first sub-display and the second sub-display are installed at any of left and right sides or upper and lower sides.

2. The display of claim 1, wherein the screen size of the first sub-display and the second sub-display are smaller than that of the main display.

3. The display of claim 2, wherein the first sub-display and the second sub-display are hinge-coupled to the main display to be rotatably coupled thereto.

4. The display of claim 2, wherein the first sub-display and the second sub-display is shaft-coupled to the main display to be rotatably coupled thereto.

5. The display of claim 2, wherein at least one of the first sub-display and the second sub-display is removably coupled to the main display.

6. The display of claim 5, wherein the USB output port of the main board and the USB video module of the second sub-display are connected to each other in the wireless USB communication.

7. A computer, comprising:
a display having a configuration as set forth in any one of claims 1 to 5;
a main board including USB output ports, a communication unit for receiving display data by connecting to website through an internet network, and a controller controlling an operation for outputting display data to the display; and
a dual graphics card mounted on the main board to output the display data to the display according to the control of a controller.

8. A computer of claim 7, further comprising a connection unit automatically accessing a specific website through the communication unit by executing an embedded connection program,
wherein the controller outputs data provided from the specific website to the first sub-display or the second sub-display.

9. The display of claim 7, further comprising a connection unit automatically accessing a specific website through the communication unit by executing an embedded connection program,
wherein the controller outputs data provided from the specific website to the first sub-display.

10. The display of claim 8, wherein data provided from the specific website includes at least one of advertisement contents, intranet, news, mail, education, stock, and chatting data.

11. A computer of claim 8, wherein the controller receives a linked webpage corresponding to the selected data through the internet network and outputs it to the main display unit or the second sub-display, when the data displayed on the first sub-display is selected through the input interface, and receives a linked webpage corresponding to the selected data through the internet network and outputs it to the main display unit or the first sub-display, when the data displayed on the second sub-display is selected through the input interface.

12. The computer of claim 8, wherein the controller receives a linked webpage corresponding to the selected data through the internet network and outputs it to the main display unit or the second sub-display, when the data displayed on the first sub-display is selected through the input interface.

13. The computer of claim 8, wherein the controller is set to display the display data displayed and requested according to a command input through the input interface by the user on the second sub-display.

14. The computer of claim 8, wherein the display, the main board, and the dual graphics card is included in the casing to be integrally manufactured.

15. The computer of claim 14, wherein the second input port of the first sub-display is directly connected to the second output port of the dual graphics card through a digital video cable and the data output from the second output port is directly received in the second input port in a digital format to be displayed on the first sub-display.

16. A display connected to a computer and displaying data provided from the computer, comprising:
a main display including a first input port, the first input port being connected to an output port of a dual graphics card mounted on a main board of the computer through a first cable;
a first sub-display including a first USB video module having a second input port, the first USB video module being connected to a first USB output port included in the main board through a second cable; and
a second sub-display including a second USB video module having a third input port, the second USB module being connected to the second USB output port included in the main board through a third cable,
wherein the first sub-display and the second sub-display are installed at any of left and right sides or upper and lower sides of the main display.

17. The display of claim 16, wherein at least one of the first sub-display and the second sub-display is removably coupled to the main display.

18. The display of claim 17, wherein at least one of the first USB output port of the main board, the first USB video module of the first sub-display, and the second USB output port of the main board and the second USB video module of the second sub-display is connected in a wireless USB.
